# EUROPÄISCHE PATENTANMELDUNG

(11) **EP 4 116 604 A1**
(43) Veröffentlichungstag der Anmeldung: **11.01.2023**
(21) Anmeldenummer: 21184038.4
(22) Anmeldetag: 06.07.2021
(51) Int. Cl.: F16H 49/00, F16H 55/08

(54) **FLEXIBLE ZAHNRADSCHEIBE UND FLEXIBLES ZAHNRAD FÜR EIN HOCHUNTERSETZENDES GETRIEBE SOWIE EIN DERARTIGES HOCHUNTERSETZENDES GETRIEBE**

(71) Anmelder: maxon international ag, 6072 Sachseln (CH)
(72) Erfinder: von Lehmann, Ernst, 79286 Glottertal (DE)
(74) Vertreter: Grünecker Patent- und Rechtsanwälte PartG mbB

(57) **Zusammenfassung**

Die vorliegende Erfindung betrifft eine flexible Zahnradscheibe für ein hochuntersetzendes Getriebe mit mindestens zwei in Umfangsrichtung der Zahnradscheibe nebeneinander angeordneten Zahnradsegmenten, die mittels Federsegmenten miteinander verbunden sind. Die Aufgabe der vorliegenden Erfindung ist es, die aus dem Stand der Technik bekannten Vorrichtungen weiter zu verbessern und insbesondere eine flexible Zahnradscheibe, ein flexibles Zahnrad mit mindestens zwei flexiblen Zahnradscheiben und ein Getriebe mit einem flexiblen Zahnrad bereitzustellen, die gleichzeitig eine erhöhte Flexibilität der Zahnradscheiben bzw. des Zahnrads in radialer Richtung sowie eine erhöhte Steifigkeit in Umfangsrichtung ermöglichen. Diese Aufgabe wird erfindungsgemäß dadurch gelöst, dass die Federsegmente schräg zur Umfangsrichtung der Zahnradscheibe verlaufen.

## Beschreibung

Die vorliegende Erfindung betrifft eine flexible Zahnradscheibe für ein hochuntersetzendes Getriebe mit mindestens zwei in Umfangsrichtung der Zahnradscheibe nebeneinander angeordneten Zahnradsegmenten, die mittels Federsegmenten miteinander verbunden sind. Ferner betrifft die Erfindung auch ein flexibles Zahnrad für ein hochuntersetzendes Getriebe umfassend mindestens zwei der flexiblen Zahnradscheiben, die in axialer Richtung nebeneinander angeordnet sind, und ein Getriebe mit einem Hohlrad, mit einem in dem Hohlrad angeordneten flexiblen Zahnrad und mit einem Wavegenerator, der mit dem flexiblen Zahnrad in Verbindung steht und der das flexible Zahnrad verformt, so dass es bereichsweise mit dem Hohlrad in Eingriff steht.

Ein derartiges flexibles Zahnrad umfassend mehrere flexible Zahnradscheiben und ein hochuntersetzendes Getriebe mit solch einem flexiblen Zahnrad sind beispielsweise aus der EP 3 828 442 A1 bekannt. Dort ist bereits beschrieben, dass das flexible Zahnrad mindestens zwei in axialer Richtung nebeneinander angeordnete flexible Zahnradscheiben aufweist und jede flexible Zahnradscheibe in Umfangsrichtung nebeneinander angeordnete Zahnradsegmente umfasst, die mittels Federsegmente miteinander verbunden sind. Die Federsegmente greifen in radialer Richtung des Zahnrads etwa in der Mitte der Zahnradsegmente an diesen an und sind als Kreisringstücke ausgebildet. Die Federsegmente liegen also auf einem Kreis, der konzentrisch mit dem flexiblen Zahnrad ist, und verlaufen somit in Umfangsrichtung des flexiblen Zahnrads bzw. der flexiblen Zahnradscheiben. Jede flexible Zahnradscheibe umfasst zwei unterschiedliche Typen von Zahnradsegmenten, die abwechselnd angeordnet sind. Jedes der Zahnradsegmente weist einen Kopfbereich und einen Fußbereich auf. Der Kopfbereich der Zahnradsegmente ist jeweils mit einer Außenverzahnung versehen, die mit der Innenverzahnung eines Hohlrad in Eingriff bringbar ist. Der Fußbereich der Zahnradsegmente steht mit einem Wavegenerator in Kontakt. Eine Drehbewegung des Wavegenerators führt dazu, dass das flexible Zahnrad bereichsweise nach außen gedrückt und mit dem Hohlrad in Eingriff gebracht wird. Der erste Typ der Zahnradsegmente weist jeweils eine in etwa mittig in dem Zahnradsegment angeordnete Ausnehmung auf, in der ein Zapfen aufgenommen wird, um eine Drehbewegung des flexiblen Zahnrads auf einen Abtrieb zu übertragen. Der zweite Typ der Zahnradsegmente weist keine Ausnehmung auf, sondern ist in der Mitte tailliert. Dort greifen die Federsegmente an. Dadurch kann die Länge der Federsegmente erhöht werden und es wird eine gute Kombination aus Flexibilität und Festigkeit der flexiblen Zahnradscheiben und somit des flexiblen Zahnrads erreicht.

Die Aufgabe der vorliegenden Erfindung ist es, die aus dem Stand der Technik bekannten Vorrichtungen weiter zu verbessern und insbesondere eine flexible Zahnradscheibe, ein flexibles Zahnrad mit mindestens zwei flexiblen Zahnradscheiben und ein Getriebe mit einem flexiblen Zahnrad bereitzustellen, die gleichzeitig eine erhöhte Flexibilität der Zahnradscheiben bzw. des Zahnrads in radialer Richtung sowie eine erhöhte Steifigkeit in Umfangsrichtung ermöglichen.

Diese Aufgabe wird in Bezug auf die flexible Zahnradscheibe für ein hochuntersetzendes Getriebe mit mindestens zwei in Umfangsrichtung der flexiblen Zahnradscheibe nebeneinander angeordneten Zahnradsegmenten, die mittels Federsegmenten miteinander verbunden sind erfindungsgemäß dadurch gelöst, dass die Federsegmente schräg zur Umfangsrichtung der flexiblen Zahnradscheibe verlaufen. Dadurch, dass die Federsegmente schräg zur Umfangsrichtung der flexiblen Zahnradscheibe verlaufen, wird zum einen die für die gewünschte radiale Flexibilität benötigte Federlänge erreicht. Zum anderen führt der schräge Verlauf der Federsegmente dazu, dass die Federsegmente an den benachbarten Zahnradsegmenten auf unterschiedlicher Höhe angreifen. Dies führt dazu, dass den Zahnradsegmenten bei einer Verformung der flexiblen Zahnradscheibe durch einen Wavegenerator und einem auf die Zahnradsegmente wirkendem Lastmoment eine Verdrehrichtung vorgegeben ist.

In einer bevorzugten Ausführungsform kann vorgesehen sein, dass eine Längsachse jedes Federsegments einen Winkel α > 0° mit einer an einer mittleren Umfangsposition des Federsegments am Umfang der flexiblen Zahnradscheibe anliegenden Tangente einschließt, bevorzugt einen Winkel α in einem Bereich von 10° - 70°, besonders bevorzugt einen Winkel α von 35° - 55°. Die Längsachse des Federsegments ist die Achse, die sich mittig in der Breite und der Dicke des Federsegments zwischen den beiden Verbindungspunkten des Federsegments mit den beiden benachbarten Zahnradsegmenten erstreckt. Die mittlere Umfangsposition des Federsegments ist die Position, an der das Federsegment entlang seiner Längserstreckung in zwei gleich lange Teile unterteilt ist. Die Federsegmente sind im Wesentlichen stab- oder bandförmig ausgebildet, so dass ihre Längserstreckung deutlich größer ist als ihre Breite und ihre Dicke. Durch die beschriebene Ausgestaltung wird die schräge Anordnung des Federsegments bzw. der Federsegmente erreicht, die zu den oben genannten Vorteilen, nämlich erhöhter radialer Flexibilität bei gleichzeitiger Erhöhung der Steifigkeit in Umfangsrichtung, führt. Vorzugsweise sind die Federsegmente so ausgebildet, dass sie in einer Ebene mit den Zahnradsegmenten und somit in einer Ebene mit der flexiblen Zahnradscheibe liegen.

In einer weiteren bevorzugten Ausführungsform kann vorgesehen sein, dass sich mindestens eines der Federsegmente von einem Kopfbereich eines Zahnradsegments zum Fußbereich des in Umfangsrichtung der flexiblen Zahnradscheibe daneben angeordneten Zahnradsegments erstreckt. Die beiden Verbindungspunkte der Federsegmente mit den beiden jeweils daneben liegenden Zahnradsegmenten liegen also auf unterschiedlichen Seiten eines Mittenkreises, der auf halber Höhe der Zahnradsegmente verläuft. Dies führt zu einer sehr großen Länge der Federsegmente und damit zur Erzielung der gewünschten radialen Flexibilität in Kombination mit der Erhöhung der Steifigkeit in Umfangsrichtung der flexiblen Zahnradscheibe.

Vorteilhafterweise kann ferner vorgesehen sein, dass im Fußbereich zumindest eines der Zahnradsegmente oberhalb des Federsegments ein Schlitz ausgebildet ist. Vorzugsweise ist der Schlitz oberhalb des Punktes bzw. des Bereichs angebracht, an dem das Federsegment an das Zahnradsegment angreift bzw. in das Zahnradsegment übergeht. Der Schlitz verläuft bevorzugt parallel zu dem Federsegment. Dies erhöht die Elastizität des Zahnradsegments bzw. der Zahnradsegmente und führt zur gewünschten Verformbarkeit.

Diese gewünschte Verformbarkeit kann weiter erhöht werden, wenn im Kopfbereich zumindest eines der Zahnradsegmente unterhalb des Federsegments eine Hinterschneidung ausgebildet ist. Auch die Hinterschneidung ist vorzugsweise parallel zur Erstreckung des Federsegments ausgebildet. Die Hinterschneidung ist deutlich kürzer als der im Fußbereich der Zahnradsegmente ausgebildete Schlitz. Vorzugsweise beträgt die Länge der Hinterschneidung maximal das 0,3-fache der Länge des Schlitzes.

In Bezug auf das flexible Zahnrad für ein hochuntersetzendes Getriebe wird die oben genannte Aufgabe erfindungsgemäß dadurch gelöst, dass das flexible Zahnrad mindestens zwei in axialer Richtung nebeneinander angeordnete, wie oben beschrieben ausgebildete flexible Zahnradscheiben umfasst, wobei die flexiblen Zahnradscheiben derart angeordnet sind, dass sich die Federsegmente der nebeneinander angeordneten flexiblen Zahnradscheiben kreuzen. Benachbarte flexible Zahnradscheiben sind also derart angeordnet, dass sie in Bezug auf eine senkrecht zur Rotationsachse der flexiblen Zahnradscheiben verlaufende Achse (also um eine in radialer Richtung der flexiblen Zahnradscheiben verlaufenden Achse) um 180° gedreht sind. Bei einer Draufsicht in axialer Richtung auf die nebeneinander angeordneten flexiblen Zahnradscheiben kreuzen sich die Federsegmente der benachbarten bzw. nebeneinanderliegenden Zahnradscheiben also. Durch die diagonal verlaufenden und gekreuzten Federsegmente wird zusätzlich zur Verbesserung der Steifigkeit des flexiblen Zahnrads auch der Wirkungsgrad, die Geräuschentwicklung, das Verdrehspiel und die Lebensdauer verbessert.

Eine weitere Erhöhung der Steifigkeit in Umfangsrichtung des flexiblen Zahnrads kann dadurch erreicht werden, dass zumindest eines und insbesondere in Umfangsrichtung zumindest jedes zweite der Zahnradsegmente jeder flexiblen Zahnradscheibe mit dem in axialer Richtung, d.h. in Richtung der Rotationsachse, daneben liegenden Zahnradsegment der daneben angeordneten flexiblen Zahnradscheibe verbunden ist, vorzugsweise fest verbunden ist. Im eingebauten Zustand des flexiblen Zahnrads in einem Getriebe kommt die Außenverzahnung der Zahnradsegmente mit der Innenverzahnung eines Hohlrads in Eingriff. Durch die Verformung des flexiblen Zahnrads bzw. der flexiblen Zahnradscheiben sind immer mindestens zwei und bevorzugt vier (jeweils zwei nebeneinander auf gegenüberliegenden Seiten des flexiblen Zahnrads bzw. der flexiblen Zahnradscheibe) Zahnradsegmente jeder flexiblen Zahnradscheibe mit der Hohlradverzahnung in Eingriff. Da die in axialer Richtung nebeneinanderliegenden flexiblen Zahnradscheiben jeweils um eine radiale Achse um 180° zueinander gedreht sind, sodass sich ihre Federsegmente kreuzen, verdrehen sich die in axialer Richtung nebeneinanderliegenden Zahnradsegmente der nebeneinander angeordneten flexiblen Zahnradscheiben bei einer Verformung der flexiblen Zahnradscheiben und damit des flexiblen Zahnrads gegenläufig zueinander. Durch die verdrehrichtungsvorgebende Verbindung der in Umfangsrichtung nebeneinanderliegenden Zahnradsegmente der in axialer Richtung nebeneinander angeordneten flexiblen Zahnradscheiben wird somit ein gleichsinniges Verdrehen der Zahnradsegmente unterbunden. Die axial aneinander anliegenden Zahnradsegmente können sich nur abwechselnd gegenläufig verdrehen. Da die aneinander anliegenden Zahnradsegmente fest miteinander verbunden sind und in einem in ein Getriebe eingebauten Zustand mit einem Hohlrad in Eingriff sind, verhindern diese Zahnradsegmente gegenseitig ein Verdrehen. Dies erhöht die Steifigkeit. Die Flexibilität des Zahnrads in radialer Richtung ist aber weiterhin gegeben und das flexible Zahnrad kann sich der Verformung durch den Wavegenerator anpassen. Vorzugsweise ist das flexible Zahnrad derart ausgestaltet, dass jedes oder in Umfangsrichtung jedes zweite der Zahnradsegmente jeder flexiblen Zahnradscheibe mit dem in axialer Richtung daneben angeordneten Zahnradsegment der daneben angeordneten flexiblen Zahnradscheibe bzw. der daneben angeordneten flexiblen Zahnradscheiben fest verbunden ist. Die in axialer Richtung nebeneinander angeordneten bzw. aneinander anliegenden Zahnradsegmente der flexiblen Zahnradscheiben bilden also Zahnradsegmentgruppen aus, die sich jeweils über die gesamte Breite des flexiblen Zahnrads erstrecken.

Die feste Verbindung der nebeneinanderliegenden Zahnradsegmente von nebeneinander angeordneten flexiblen Zahnradscheiben kann in einer einfachen Ausgestaltung dadurch erreicht werden, dass die in axialer Richtung aneinander anliegenden Zahnradsegmente der nebeneinander angeordneten flexiblen Zahnradscheiben miteinander verstiftet sind.

In Bezug auf das Getriebe wird die oben beschriebene Aufgabe dadurch gelöst, dass das Getriebe ein Hohlrad, ein in dem Hohlrad angeordnetes flexibles Zahnrad und einen Wavegenerator umfasst, wobei der Wavegenerator mit dem flexiblen Zahnrad in Verbindung steht und das flexible Zahnrad verformt, so dass es bereichsweise mit dem Hohlrad in Eingriff steht, und wobei das flexible Zahnrad wie oben beschrieben ausgebildet ist. Durch das im Getriebe eingesetzte flexible Zahnrad mit erhöhter Steifigkeit in Umfangsrichtung wird der Wirkungsgrad, die Geräuschentwicklung, das Verdrehspiel und die Lebensdauer verbessert.

In einer einfachen Ausgestaltung kann das Getriebe vorzugsweise derart ausgebildet sein, dass mindestens eines der Zahnradsegmente des flexiblen Zahnrads derart mit einem Abtrieb verbunden ist, dass eine walkende Drehbewegung des flexiblen Zahnrads in eine einfache Drehbewegung übertragen wird.

Dies kann beispielsweise dadurch erreicht werden, dass auf mindestens einer Seite des flexiblen Zahnrads eine Stützscheibe angeordnet ist und durch mindestens eine der durch die in axialer Richtung nebeneinanderliegenden Zahnradsegmente ausgebildeten Zahnradsegmentgruppen mindestens ein Bolzen geführt ist, der in Kontakt mit der mindestens einen Stützscheibe steht. Vorzugsweise kann vorgesehen sein, dass auf beiden Seiten des flexiblen Zahnrads je eine Stützscheibe angeordnet ist und der mindestens eine Bolzen in Kontakt mit beiden Stützscheiben steht. Vorzugsweise sind die beiden Stützscheiben über Achsen starr miteinander verbunden. Die Achsen haben keinen Kontakt mit dem flexiblen Zahnrad.

Um eine stabile und symmetrische Ausgestaltung zu erreichen, kann vorgesehen sein, dass durch jede der durch die in axialer Richtung nebeneinanderliegenden Zahnradsegmente ausgebildeten Zahnradsegmentgruppen des flexiblen Zahnrads mindestens ein Bolzen geführt ist, der in Kontakt mit der mindestens einen Stützscheibe steht. Es kann auch vorgesehen werden, dass durch jede der Zahnradsegmentgruppen mehrere, vorzugsweise zwei, Bolzen geführt sind, die Kontakt mit den seitlich neben dem flexiblen Zahnrad angeordneten Stützscheiben haben. Hierdurch wird die Stabilität der gesamten Konstruktion erhöht.

Um die Übertragung der walkenden Drehbewegung des flexiblen Zahnrads auf die Stützscheiben zu ermöglichen, kann vorgesehen sein, dass der mindestens eine Bolzen relativ zu der mindestens einen Zahnradsegmentgruppe, also relativ zu den Zahnradsegmenten, durch die er geführt ist, ortsfest, aber drehbar gelagert ist und auf einer in sich geschlossenen Kontur in der mindestens einen Stützscheibe abrollt. Dadurch wird eine einfache und stabile Ausgestaltung ermöglicht.

In einer alternativen Ausführungsform kann vorgesehen sein, dass der mindestens eine Bolzen relativ zu der mindestens einen Stützscheibe ortsfest, aber drehbar gelagert ist und auf einer in sich geschlossenen Kontur in der mindestens einen Zahnradsegmentgruppe, also in den Zahnradsegmenten, durch die er geführt ist, abrollt.

In noch einer weiteren alternativen Ausführungsform kann vorgesehen sein, dass der mindestens eine Bolzen sich sowohl auf einer in sich geschlossenen Kontur in der mindestens einen Stützscheibe als auch auf einer in sich geschlossenen Kontur in der mindestens einen Zahnradsegmentgruppe, also in den Zahnradsegmenten, durch die er geführt ist, abrollt, wobei die Kontur der mindestens einen Stützscheibe und die Kontur in den jeweiligen Zahnradsegmenten so gestaltet sind, dass ihre Umfangslänge gleich ist. Auch hierdurch wird eine sichere und stabile Übertragung ermöglicht.

In einer weiteren bevorzugten Ausgestaltung kann vorgesehen sein, dass sich die Federsegmente der in axialer Richtung nebeneinanderliegenden flexiblen Zahnradscheiben auf der radialen Höhe des mindestens einen Bolzens kreuzen. Auch diese Ausgestaltung trägt dazu bei, dass die gewünschte Flexibilität erreicht wird.

Der Wirkungsgrad des Getriebes kann ferner auch dadurch erhöht werden, dass das flexible Zahnrad nicht direkt auf dem Wavegenerator bzw. auf einem auf dem Wavegenerator angeordneten Flexlager aufliegt, sondern, dass in einem Fußbereich von zumindest einigen der durch die in axialer Richtung nebeneinanderliegenden Zahnradsegmente ausgebildeten Zahnradsegmentgruppen des flexiblen Zahnrads mindestens eine Rolle angeordnet ist, die in Kontakt mit dem mindestens einen Wavegenerator stehen. Der Kontakt zwischen dem Wavegenerator und den Rollen kann direkt oder indirekt sein, je nachdem ob auf dem Wavegenerator weitere Bauteile, wie beispielsweise ein Flexlager, angeordnet sind. Jede der Rollen ist vorzugsweise mittig in der entsprechenden Zahnradsegmentgruppe gelagert. Es kann auch vorgesehen werden, dass mehrere Rollen pro Zahnradsegmentgruppe angeordnet sind, beispielsweise zwei Rollen je Zahnradsegmentgruppe. In diesem Fall sind die Rollen vorzugsweise an den Rändern der Zahnradsegmentgruppen angeordnet, sodass nur jedes zweite Zahnradsegment der entsprechenden Zahnradsegmentgruppe mit der jeweiligen Rolle in Kontakt steht.

Im Folgenden wird die Erfindung anhand von Zeichnungen näher erläutert. Es zeigen:
Fig. 1: dreidimensionale Darstellung eines erfindungsgemäßen hochuntersetzenden Getriebes;
Fig. 2: dreidimensionale Darstellung des Getriebes aus Fig. 1, teilweise geschnitten;
Fig. 3: dreidimensionale Darstellung des Getriebes aus Fig. 1 ohne Gehäuse;
Fig. 4: Vorderansicht eines flexiblen Zahnrads des Getriebes aus Fig. 1;
Fig. 5: Draufsicht auf nebeneinander angeordnete flexible Zahnradscheiben des Getriebes aus Fig. 1;
Fig. 6: dreidimensionale Darstellung eines Teilbereichs des Getriebes aus Fig. 1 ohne vordere Stützscheibe;
Fig. 7: Teildarstellung der Vorderansicht des Getriebes aus Fig. 1 ohne Gehäuse und ohne vordere Stützscheibe;
Fig. 8: Detail des Getriebes aus Fig. 1, und
Fig. 9: Dreidimensionale Darstellung einer weiteren Ausführungsform eines erfindungsgemäßen Getriebes ohne Gehäuse.

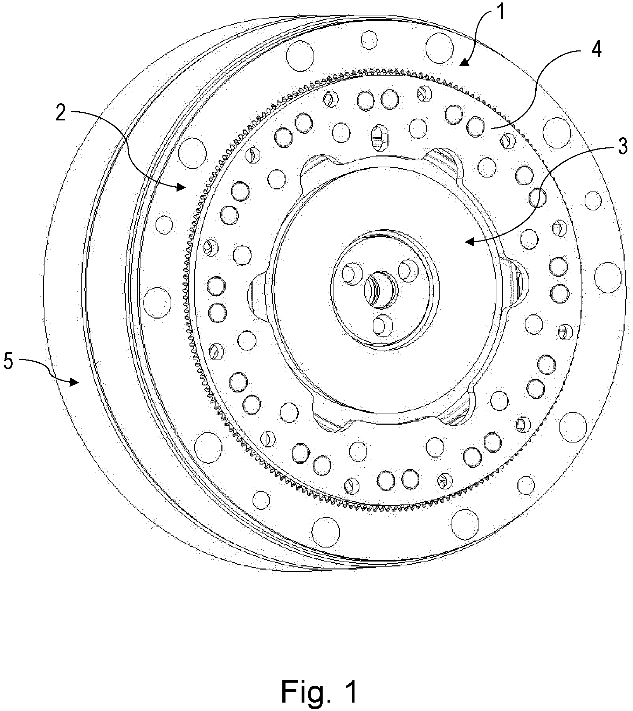

Die Fig. 1 zeigt eine dreidimensionale Darstellung eines hochuntersetzenden Getriebes 1. Das hochuntersetzende Getriebe 1 umfasst ein Hohlrad 2, ein in dem Hohlrad 2 angeordnetes flexibles Zahnrad (in Fig. 1 nicht zu sehen), einen Wavegenerator 3, der in Kontakt mit dem flexiblen Zahnrad steht, zwei seitlich neben dem flexiblen Zahnrad angeordnete Stützscheiben 4 und ein Gehäuse 5.

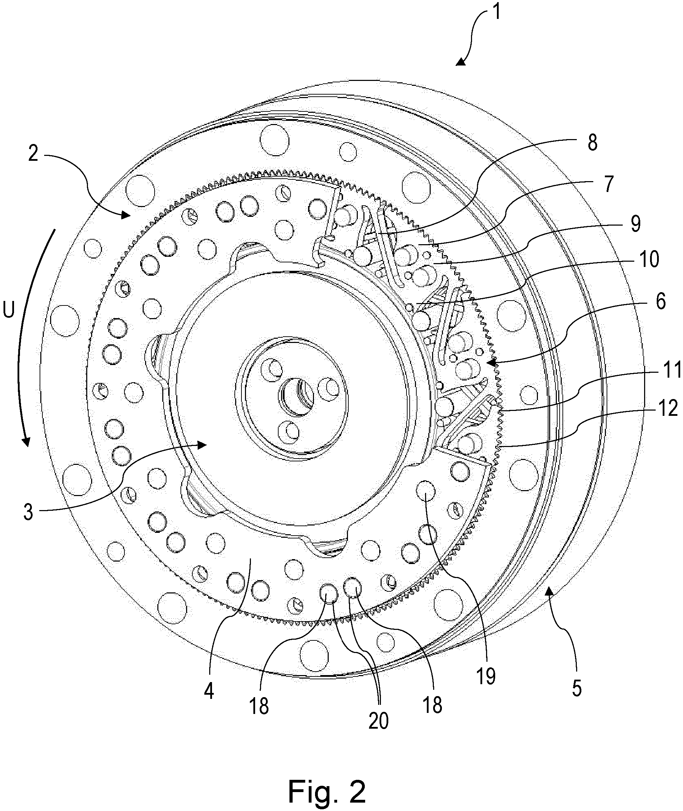

In Fig. 2 ist die vordere Stützscheibe 4 des Getriebes 1 teilweise geschnitten, so dass ein Blick ins Innere des Getriebes 1 ermöglicht wird. In Fig. 2 ist daher das flexible Zahnrad 6 zu sehen. Das flexible Zahnrad 6 umfasst in Umfangsrichtung nebeneinander angeordnete Zahnradsegmente 7 die mittels Federsegmenten 8 elastisch miteinander verbunden sind. Die einzelnen Zahnradsegmente 7 sind etwas beabstandet zueinander angeordnet. Jedes der Zahnradsegmente 7 weist einen Kopfbereich 9 und einen Fußbereich 10 auf. Die Kopfbereiche 9 der Zahnradsegmente 7 sind mit einer Außenverzahnung 11 versehen. Das Hohlrad 2 weist eine Innenverzahnung 12 auf. Die Fußbereiche 10 der Zahnradsegmente 7 stehen mit dem Wavegenerator 3 in Kontakt bzw. können mit diesem in Kontakt gebracht werden.

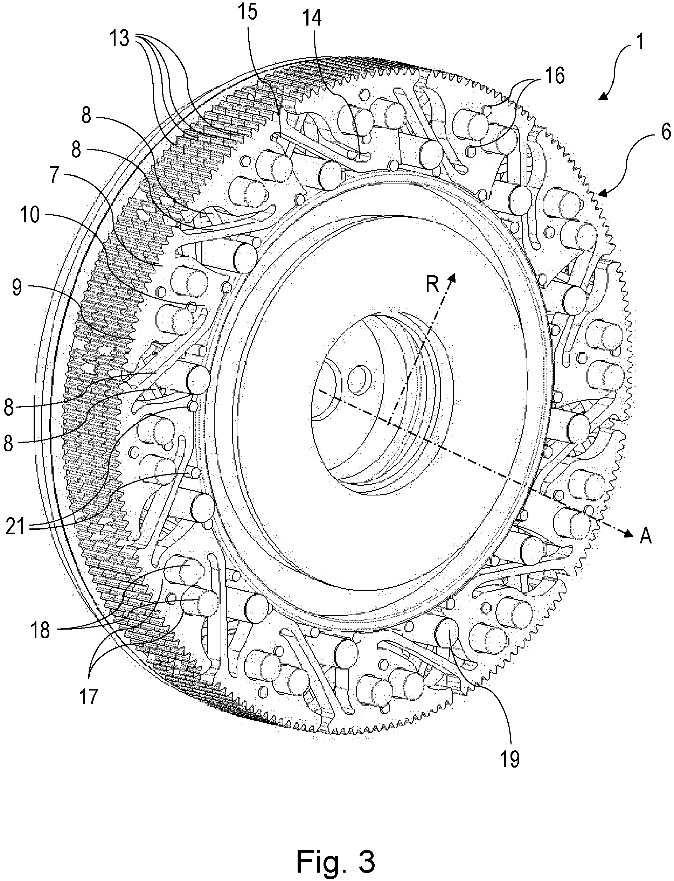

Mittels des Wavegenerators 3 wird das flexible Zahnrad 6 verformt, sodass die Außenverzahnung 11 von mindestens zwei Zahnradsegmenten 7 in Eingriff mit der Innenverzahnung 12 des Hohlrads 2 gebracht wird. Mittels des Wavegenerators 3 werden also Bereiche des flexiblen Zahnrads 6 nach außen gedrückt. Dies wird durch die Federsegmente 8 ermöglicht, die eine Bewegung des flexiblen Zahnrads 6 in radialer Richtung R (in Fig. 3 dargestellt) zulassen.

Wie in Fig. 2 zu erkennen, sind die Federsegmente 8 als bandförmige Elemente ausgebildet. Dies bedeutet, dass die Längserstreckung der Federsegmente 8 deutlich größer ist als ihre Dicke und ihre Breite. Die Federsegmente 8 erstrecken sich schräg zur Umfangsrichtung U des flexiblen Zahnrads 6. Die Federsegmente 8 erstrecken sich also ausgehend von dem Fußbereich 10 eines ersten Zahnradsegments 7 zum Kopfbereich 9 des benachbart dazu angeordneten Zahnradsegments 7.

Der genaue Aufbau des flexiblen Zahnrads 6, insbesondere die Verbindung mit den Stützscheiben 4 und die Anordnung auf bzw. der Kontakt mit dem Wavegenerator 3 wird im Folgenden in Bezug auf die weiteren Zeichnungen noch genauer erläutert.

Fig. 3 zeigt eine dreidimensionale Darstellung des flexiblen Getriebes 1 ohne das Gehäuse und ohne das Hohlrad. Das flexible Zahnrad 6 umfasst vier flexible Zahnradscheiben 13, die in axialer Richtung A, also entlang der Rotationsachse, nebeneinander angeordnet sind. Die Zahnradscheiben 13 sind vorzugsweise als Gleichteile ausgebildet. Die flexiblen Zahnradscheiben 13 sind jeweils einteilig ausgebildet. Jede der flexiblen Zahnradscheiben 13 ist wie oben beschrieben aufgebaut und umfasst in Umfangsrichtung U nebeneinander angeordnete Zahnradsegmente 7 die mittels Federsegmenten 8 miteinander verbunden sind. Die Zahnradsegmente 7 jeder flexiblen Zahnradscheibe 13 sind etwas beabstandet zueinander angeordnet. Wie oben beschrieben, weist jedes der Zahnradsegmente 7 einen Kopfbereich 9 und einen Fußbereich 10 auf. Die Kopfbereiche 9 der Zahnradsegmente 7 sind mit einer Außenverzahnung 11 versehen. Die Fußbereiche 10 der Zahnradsegmente 7 stehen mit dem Wavegenerator 3 in Kontakt bzw. können mit diesem in Kontakt gebracht werden. Die Federsegmente 8 sind als bandförmige Elemente ausgebildet, deren Längserstreckung deutlich größer ist als ihre Dicke und ihre Breite. Die Federsegmente 8 erstrecken sich schräg zur Umfangsrichtung U des flexiblen Zahnrads. Die Federsegmente 8 erstrecken sich also ausgehend von einem Fußbereich 10 eines ersten Zahnradsegments 7 zum Kopfbereich 9 des benachbart angeordneten Zahnradsegments 7. Die benachbart zueinander angeordneten flexiblen Zahnradscheiben 13 sind jeweils um 180° um eine in radialer Richtung des flexiblen Zahnrads 6 verlaufende Achse zueinander gedreht, sodass sich die Federsegmente 8 der nebeneinanderliegenden Zahnradscheiben 13 kreuzen. Durch die diagonal verlaufenden und sich kreuzenden Federsegmente 8 wird die Steifigkeit der flexiblen Zahnradscheiben 13 und somit auch des flexiblen Zahnrads 6 in Umfangsrichtung erhöht. Die Flexibilität in radialer Richtung ist weiterhin gegeben, sodass sich das flexible Zahnrad 6 der Verformung durch den Wavegenerator 3 anpassen kann. Der Wirkungsgrad, die Geräuschentwicklung, dass Verdrehspiel und die Lebensdauer werden ebenfalls verbessert. Die diagonale Anordnung der Federsegmente 8 führt dazu, dass die notwendige Federlänge erreicht wird.

In den dargestellten Ausführungsbeispielen sind sowohl die Zahnradsegmente 7 als auch die Federsegmente 8 aller flexiblen Zahnradscheiben 13 jeweils identisch ausgebildet. Jedes der Zahnradsegmente 7 umfasst den Fußbereich 10 und den Kopfbereich 9. Im Kopfbereich 9 ist die Außenverzahnung 11 ausgebildet. Die Federsegmente 8 erstrecken sich ausgehend vom Fußbereich 10 eines ersten Zahnradsegments 7 zum Kopfbereich 9 des in Umfangsrichtung danebenliegenden Zahnradsegments 6. Dadurch wird die diagonale Anordnung der Federsegmente 8 erreicht. Die Federsegmente 8 müssen nicht genau im Kopfbereich und im Fußbereich mit den Zahnradsegmenten 7 verbunden sein. Es ist ausreichend, wenn ein Ende der Federsegmente oberhalb eines gedachten Mittenkreises liegt, und das andere Ende der Federsegmente unterhalb ein des gedachten Mittenkreises liegt. Mit dem Begriff "Mittenkreis" ist hier ein Kreis beschrieben, der konzentrisch mit der flexiblen Zahnradscheibe 13 ist und in radialer Richtung auf halber Höhe der Zahnradsegmente 7 verläuft. Ferner ist in jedem Zahnradsegment 7 ein Schlitz 14 ausgebildet, der oberhalb von und parallel zu den Federsegmenten 8 verläuft. Durch diesen Schlitz 14 wird die Elastizität der Federsegmente 7 im Fußbereich erhöht. Im Kopfbereich 9 der Zahnradsegmente 7 ist jeweils eine Hinterschneidung 15 ausgebildet, die ebenfalls zu einer erhöhten Elastizität der Federsegmente 7 in diesem Bereich führt. Die Länge der Hinterschneidung in 15 ist deutlich kürzer als die Länge des Schlitzes 14 und beträgt maximal ein Drittel der Länge des Schlitzes 14.

Jedes Zahnradsegment 7 ist also auf der einen Seite im Fußbereich 10 mit dem dort angeordneten Federsegment 8 und auf der anderen Seite im Kopfbereich 9 mit dem dort angeordneten Federsegment 8 verbunden. Dadurch ist der Körper der Zahnradsegmente 7 asymmetrisch. Die flexiblen Zahnradscheiben 13 sind so nebeneinander angeordnet, dass sich die Zahnradsegmente 7 im Wesentlichen überlappen. Da die Zahnradsegmente 7 in sich asymmetrisch sind, führt diese Anordnung dazu, dass sich die Kopfbereich 9 und damit die Außenverzahnung 11 der Zahnradsegmente 7 der nebeneinanderliegenden Zahnradscheiben 13 überlappen. Vorzugsweise überlappen sich die in axialer Richtung nebeneinander angeordneten Zahnradsegmente 7 jeweils um einen Zahn. Auch dies führt zu einer erhöhten Stabilität des flexiblen Zahnrads 6. Die in axialer Richtung nebeneinanderliegenden Zahnradsegmente 7 der nebeneinanderliegenden flexiblen Zahnradscheiben 13 sind fest miteinander verbunden. In den dargestellten Ausführungsbeispielen sind die nebeneinanderliegenden Zahnradsegmente 7 mit Stiften 16 fest miteinander verstiftet. Durch die nebeneinanderliegenden und miteinander verstifteten Zahnradsegmente 7 werden somit Zahnradsegmentgruppen ausgebildet.

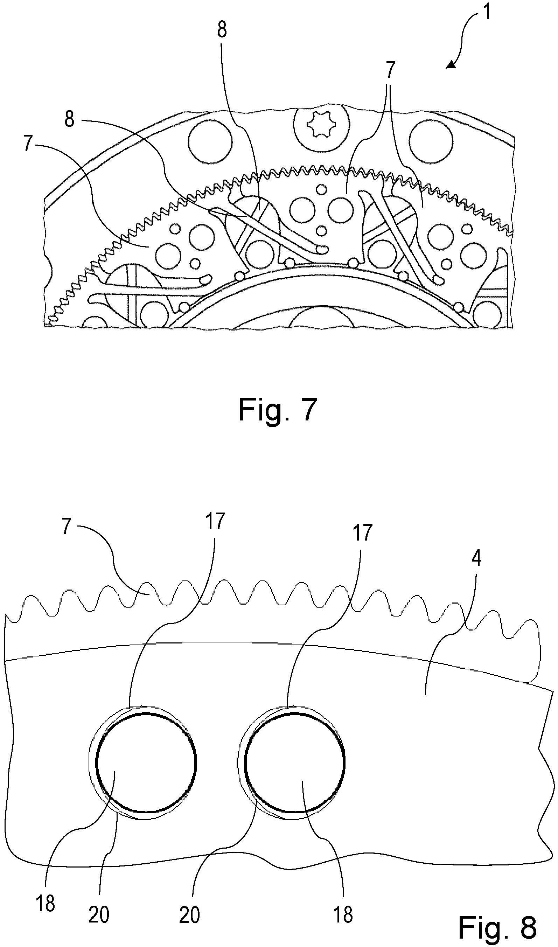

Weiterhin weist jedes Zahnradsegment 7 zwei Ausnehmungen 17 auf. Die flexiblen Zahnradscheiben 13 sind so angeordnet, dass die Ausnehmungen 17 der miteinander verstifteten Zahnradsegmente 7 übereinander liegen bzw. deckungsgleich sind. In den übereinander liegenden Ausnehmungen 17 ist jeweils ein Bolzen 18 aufgenommen. Wie in den Figuren 1 und 2 zu sehen, haben die Bolzen 18 Kontakt mit den seitlich neben dem flexiblen Zahnrad 6 angeordneten Stützscheiben 4. Dazu weisen die Stützscheiben 4 ebenfalls Ausnehmungen 20 auf, die Kontakt mit den Bolzen 18 haben. Durch die Bolzen 18 wird die walkende Drehbewegung des flexiblen Zahnrads 6 auf eine einfache Drehbewegung der Stützscheiben 4 reduziert. Die Anordnung der Bolzen 18 in den Ausnehmungen 17 der flexiblen Zahnradscheiben und in den Ausnehmungen 20 der Stützscheiben wird im Folgenden in Bezug auf Fig. 7 noch genauer beschrieben. Es könnte selbstverständlich auch nur ein Bolzen oder mehrere Bolzen pro Zahnradsegment zu Übertragung der Drehbewegung des flexiblen Zahnrads auf die seitlich angeordneten Stützscheiben vorgesehen werden.

Die Stützscheiben 4 sind über Achsen 19 starr miteinander verbunden, ohne dass die Achsen 19 Kontakt mit dem flexiblen Zahnrad 6 haben (siehe ebenfalls Fig. 1 und 2).

An den Fußbereichen 10 der Zahnradsegmente 7 sind Rollen 21 angeordnet, über die die Zahnradsegmente 7 mit dem Wavegenerator 3 in Kontakt stehen. Dies führt dazu, dass an der Kontaktstelle zwischen den Zahnradsegmenten 7 und dem Wavegenerator 3 bzw. einem zwischen dem Wavegenerator 3 und dem flexiblen Zahnrad 6 angeordneten Flexlager Rollreibung statt Gleitreibung vorliegt. Hierdurch wird der Wirkungsgrad des Getriebes erhöht, da die Reibungsverluste bei der Relativbewegung zwischen den Zahnradsegmenten und dem Wavegenerator minimiert werden. Bei dem in Fig. 3 gezeigten Ausführungsbeispiel sind an jeder Zahnradsegmentgruppe zwei Rollen 21 angeordnet. Die Rollen 21 sind außermittig an den Zahnradsegmenten 7 angeordnet und befinden an der Seite des Fußbereich 10 der Zahnradsegmente 7, an der kein Federsegment 8 angreift. Die Rollen 21 stehen daher nur mit jeden zweiten Zahnradsegment 7 einer Zahnradsegmentgruppe in Kontakt.

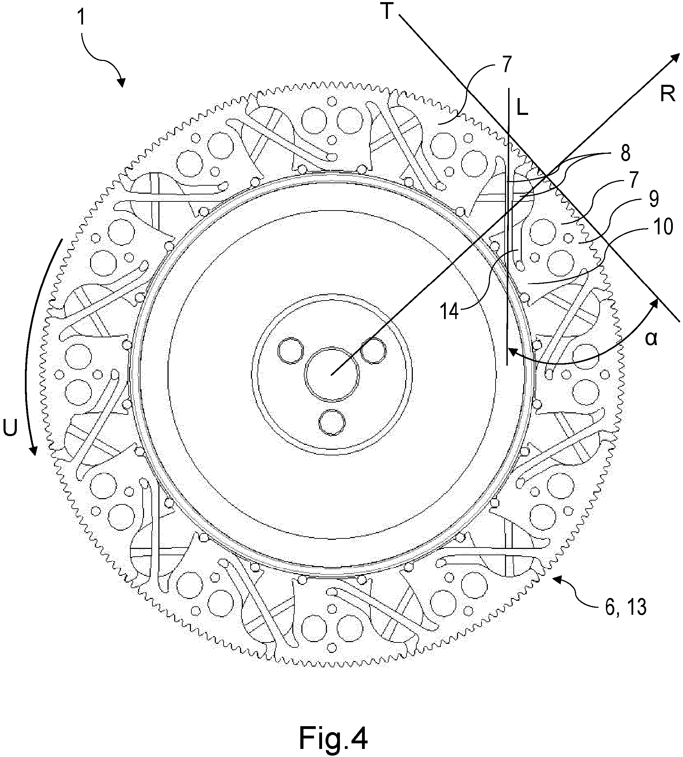

Fig. 4 zeigt eine Vorderansicht des Getriebes 1 ohne das Gehäuse und die Stützscheiben. Die oben beschriebene Ausbildung der flexiblen Zahnradscheiben 13 ist deutlich zu erkennen. Jede flexible Zahnradscheibe 13 umfasst eine Mehrzahl von in Umfangsrichtung nebeneinander angeordneten Zahnradsegmenten 7, die jeweils mittels Federsegmenten 8 miteinander verbunden sind. Im dargestellten Ausführungsbeispiel umfasst jede flexible Zahnradscheibe 13 zwölf Zahnradsegmente 7 und zwölf Federsegmente 8. Die Federsegmente 8 verlaufen schräg zur Umfangsrichtung U der flexiblen Zahnradscheiben 13. Wie bereits beschrieben, sind die Federsegmente 8 lang gestreckt ausgebildet. Die Längserstreckung der Federsegmente 8 ist daher deutlich größer als ihre Breite und ihre Dicke. Jedes Federsegment 8 weist daher eine Längsachse L auf. Die Längsachse L jedes Federsegments 8 ist die Achse, die sich mittig in der Breite und der Dicke des Federsegments 8 zwischen den beiden Verbindungspunkten des Federsegments 8 mit den beiden benachbarten Zahnradsegmenten 7 erstreckt. Die Längsachse L jedes Federsegments 8 schließt einen Winkel α mit einer Tangente T ein, wobei die Tangente T auf Höhe der mittleren Umfangsposition des entsprechenden Federsegments am Umfang der Zahnradscheibe 13 anliegt. Die mittlere Umfangsposition des Federsegments ist die Position, an der das Federsegment entlang seiner Längserstreckung in zwei gleich lange Teile unterteilt ist. Dieser Winkel α ist >0 und liegt bevorzugt in einem Bereich von 10 bis 70° und besonders bevorzugt in einem Bereich von 35 bis 55°. Im dargestellten Ausführungsbeispiel sind die Federsegmente 8 so ausgebildet, dass sie in einer Ebene mit den Zahnradsegmenten 7 und somit in einer Ebene mit der flexiblen Zahnradscheibe 13 liegen.

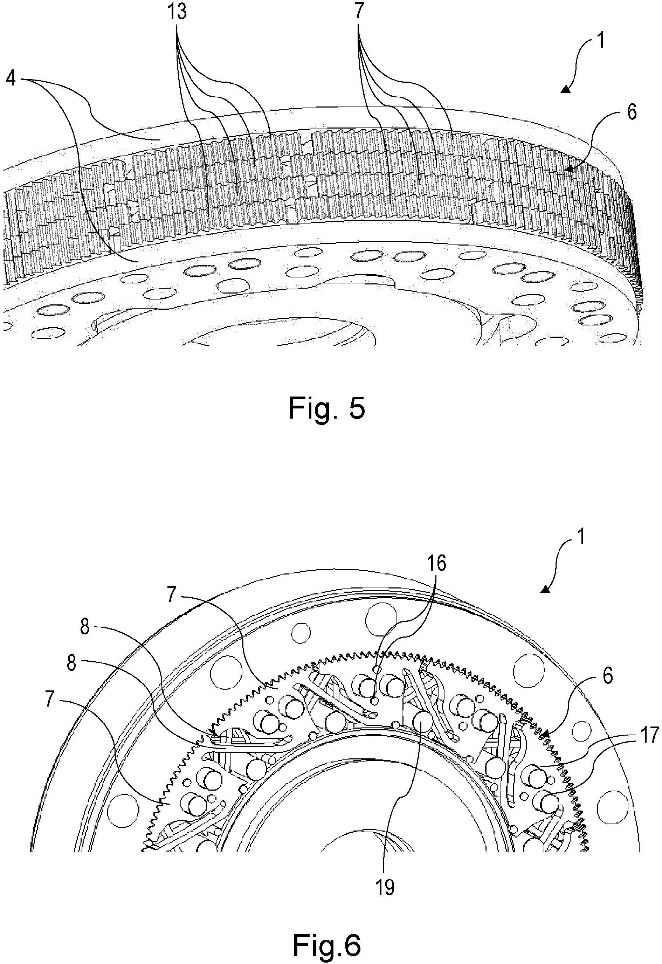

Fig. 5 zeigt die überlappende Anordnung der Zahnradsegmente 7 der flexiblen Zahnradscheiben 13. Wie oben beschrieben, sind die einzelnen Zahnradsegmente 7 asymmetrisch ausgebildet. Da benachbarte flexible Zahnradscheiben 13 um 180° um eine radiale Achse der Zahnradscheibe verdreht zueinander angeordnet sind, überlappen sich die Kopfbereiche der Zahnradsegmente 7. Wie in Fig. 4 deutlich zu erkennen, beträgt Überlappung genau eine Zahnbreite. Durch die Überlappung der Kopfbereiche der Zahnradsegmente 7 wird die Steifigkeit des flexiblen Zahnrads 6 erhöht.

Die Figuren 6 und 7 zeigen den Eingriff der Außenverzahnung 10 der Zahnradsegmente 7 in die Innenverzahnung 11 des Hohlrads 2. Durch die Verformung des flexiblen Zahnrads 2 mittels des Wavegenerators 3 sind immer mindestens zwei Zahnradsegmente 7 mit der Innenverzahnung 11 des Hohlrads 2 in Eingriff. Wie in Fig. 7 durch die Pfeile dargestellt, wird das mittlere Zahnradsegment 7 durch den Wavegenerator 3 nach außen gedrückt und verdreht sich dadurch gegen den Uhrzeigersinn. Die diagonale Anordnung der Federsegmente 8 führt dazu, dass sich die benachbarten Zahnradsegmente 7 der gleichen flexiblen Zahnradscheiben 13 gegenläufig dazu verdrehen, also im Uhrzeigersinn. Ein gleichsinniges Verdrehen der Zahnradsegmente einer flexiblen Zahnradscheiben 13 ist unterbunden, die Zahnradsegmente können sich nur abwechselnd gegenläufig verdrehen. Dies führt zu einer Steifigkeitserhöhung der flexiblen Zahnradscheiben 13 und damit des flexiblen Zahnrads 6. Da benachbart zueinander angeordnete flexible Zahnradscheiben immer um 180° um eine radiale Achse des flexiblen Zahnrads zueinander gedreht angeordnet sind, verdreht sich das Zahnradsegment 7 der in Fig. 7 zweiten bzw. vom Betrachter aus gesehen hinteren flexible Zahnradscheibe 13 im Uhrzeigersinn, die benachbart dazu angeordneten Zahnradsegmente 7 entsprechend gegen den Uhrzeigersinn. Die Zahnradsegmente 7 der in Fig. 7 hinteren bzw. zweiten flexiblen Zahnradscheibe 13 verdrehen sich also genau gegenläufig zu den Zahnradsegmente 7 der ersten bzw. vorderen flexiblen Zahnradscheibe 13. Da die Zahnradsegmente 7 der benachbart zueinander angeordneten Zahnradscheiben 13 miteinander verstiftet sind, wird ein gleichsinniges Verdrehen der Zahnradsegmente unterbunden und dadurch die Steifigkeit des flexiblen Zahnrads 6 in Umfangsrichtung weiter erhöht.

Fig. 8 zeigt die Anordnung der Ausnehmungen 17 in den Zahnradsegmenten 7 und der Ausnehmungen 20 in den Stützscheiben 4 sowie die darin angeordneten Bolzen 18. Die Ausnehmungen 17 in den Zahnradsegmenten 7 und die Ausnehmungen 20 in den Stützscheiben 4 sind im dargestellten Ausführungsbeispiel als elliptische Konturen gleicher Umfangslänge ausgebildet. Die Konturen der Ausnehmungen in den Zahnradsegmenten und der Ausnehmungen in den Stützscheiben können dabei auch um 180° verdreht zueinander angeordnet sein. Die Bolzen 18 rollen dadurch auf beiden Konturen ab, d.h. auf der Kontur der Ausnehmungen 17 der Zahnradsegmente 7 und auf der Kontur der Ausnehmungen 21 in den Stützscheiben 4, wodurch der Wirkungsgrad und die Lebensdauer des Getriebes steigen.

Es sind aber auch andere Ausführungsvarianten bei der Übertragung der Drehbewegung des flexiblen Zahnrads auf die Stützscheiben möglich. So kann zum einen vorgesehen sein, dass die Bolzen relativ zu den Zahnradsegmenten ortsfest aber drehbar gelagert sind und auf geschlossenen Konturen in den Stützscheiben abrollen. Zum anderen kann vorgesehen sein, dass die Bolzen relativ zu den Stützscheiben ortsfest aber drehbar gelagert sind und auf in sich geschlossenen Konturen in den Zahnradsegmenten 7 abrollen.

Fig. 9 zeigt ein zweites Ausführungsbeispiel für ein hochuntersetzendes Getriebe 1. In Fig. 9 sind das Gehäuse und das Hohlrad des Getriebes nicht dargestellt. Dieses zweite Ausführungsbeispiel unterscheidet sich von dem ersten Ausführungsbeispiel im Wesentlichen nur darin, dass in den Fußbereichen der Zahnradsegmente 7 nur jeweils eine Rolle 21 vorgesehen ist, über die das flexible Zahnrad 6 bzw. die flexiblen Zahnradscheiben 13 mit dem Wavegenerator 3 in Kontakt stehen. Jede der Rollen 21 ist bevorzugt mittig im Fußbereich 10 des entsprechenden Zahnradsegmente 7 angeordnet. Die weitere Ausbildung der flexiblen Zahnradscheiben 13 und somit auch des flexiblen Zahnrads 6 und des Getriebes 1 entspricht der bereits in Bezug auf die Figuren 1 bis 8 beschriebenen Ausgestaltung.

### Bezugszeichenliste

- 1: Getriebe
- 2: Hohlrad
- 3: Wavegenerator
- 4: Stützscheibe
- 5: Gehäuse
- 6: flexibles Zahnrad
- 7: Zahnradsegment
- 8: Federsegment
- 9: Kopfbereich Zahnradsegment
- 10: Fußbereich Zahnradsegment
- 11: Außenverzahnung Zahnradsegmente
- 12: Innenverzahnung Hohlrad
- 13: flexible Zahnradscheiben
- 14: Schlitz
- 15: Hinterschneidung
- 16: Stift
- 17: Ausnehmungen der Zahnradsegmente
- 18: Bolzen
- 19: Achsen
- 20: Ausnehmungen der Stützscheiben
- 21: Rollen

- U: Umfangsrichtung flexibles Zahnrad
- L: Längsachse Federsegment
- A: axiale Richtung
- R: radialer Richtung
- T: Tangente
- α: Winkel

## Patentansprüche

1. Flexible Zahnradscheibe (13) für ein hochuntersetzendes Getriebe (1) mit mindestens zwei in Umfangsrichtung (U) der flexiblen Zahnradscheibe (13) nebeneinander angeordneten Zahnradsegmenten (7), die mittels Federsegmenten (8) miteinander verbunden sind, **dadurch gekennzeichnet, dass** die Federsegmente (8) schräg zur Umfangsrichtung (U) der flexiblen Zahnradscheibe (13) verlaufen.

2. Flexible Zahnradscheibe (13) nach Anspruch 1, **dadurch gekennzeichnet, dass** eine Längsachse (L) jedes Federsegments (8) einen Winkel α > 0° mit einer an einer mittleren Umfangsposition des Federsegments (8) am Umfang der flexiblen Zahnradscheibe (13) anliegenden Tangente (T) einschließt, bevorzugt einen Winkel α in einem Bereich von 10° - 70°, besonders bevorzugt einen Winkel α von 35° - 55°.

3. Flexible Zahnradscheibe (13) nach Anspruch 1 oder 2, **dadurch gekennzeichnet, dass** sich mindestens eines der Federsegmente (8) von einem Kopfbereich (9) eines Zahnradsegments (7) zum Fußbereich (10) des in Umfangsrichtung (U) der flexiblen Zahnradscheibe (13) daneben angeordneten Zahnradsegments (7) erstreckt.

4. Flexible Zahnradscheibe (13) nach Anspruch 2 oder 3, **dadurch gekennzeichnet, dass** im Fußbereich (10) zumindest eines der Zahnradsegmente (7) oberhalb des Federsegments (8) ein Schlitz (14) ausgebildet ist.

5. Flexible Zahnradscheibe (13) nach einem der Ansprüche 2 bis 4, **dadurch gekennzeichnet, dass** im Kopfbereich (9) zumindest eines der Zahnradsegmente (7) unterhalb des Federsegments (8) eine Hinterschneidung (15) ausgebildet ist.

6. Flexibles Zahnrad (6) für ein hochuntersetzendes Getriebe (1) umfassend mindestens zwei in axialer Richtung (A) nebeneinander angeordnete flexible Zahnradscheiben (13) nach mindestens einem der Ansprüche 1 bis 5, wobei die flexiblen Zahnradscheiben (13) derart angeordnet sind, dass sich die Federsegmente (8) der nebeneinander angeordneten flexiblen Zahnradscheiben (13) kreuzen.

7. Flexibles Zahnrad (6) nach Anspruch 6, **dadurch gekennzeichnet, dass** zumindest eines und insbesondere in Umfangsrichtung zumindest jedes zweite der Zahnradsegmente (7) jeder flexiblen Zahnradscheibe (13) mit dem in axialer Richtung (A) daneben liegenden Zahnradsegment (7) der daneben angeordneten flexiblen Zahnradscheibe (13) verbunden ist, vorzugsweise fest verbunden ist.

8. Flexibles Zahnrad (6) nach einem der Ansprüche 6 oder 7, **dadurch gekennzeichnet, dass** die in axialer Richtung (A) nebeneinander liegenden Zahnradsegmente (7) der nebeneinander angeordneten flexiblen Zahnradscheiben (13) miteinander verstiftet sind.

9. Getriebe (1) mit einem Hohlrad (2), mit einem in dem Hohlrad (2) angeordneten flexiblen Zahnrad (6) und mit einem Wavegenerator (3), der mit dem flexiblen Zahnrad (6) in Verbindung steht und der das flexible Zahnrad (6) verformt, so dass es bereichsweise mit dem Hohlrad (2) in Eingriff steht, wobei das flexible Zahnrad (6) nach einem der Ansprüche 6 bis 8 ausgebildet ist.

10. Getriebe (1) nach Anspruch 9, **dadurch gekennzeichnet, dass** mindestens eines der Zahnradsegmente (7) derart mit einem Abtrieb verbunden ist, dass eine walkende Drehbewegung des flexiblen Zahnrads (6) in eine einfache Drehbewegung übertragen wird.

11. Getriebe nach Anspruch 9 oder 10, **dadurch gekennzeichnet, dass** auf mindestens einer Seite des flexiblen Zahnrads (6), vorzugsweise auf beiden Seiten des flexiblen Zahnrads (6), eine Stützscheibe (4) angeordnet ist und durch mindestens eine der durch die in axialer Richtung nebeneinanderliegenden Zahnradsegmente (7) ausgebildeten Zahnradsegmentgruppen ein Bolzen (18) geführt ist, der in Kontakt mit der mindestens einen Stützscheibe (4) steht.

12. Getriebe (1) nach Anspruch 11, **dadurch gekennzeichnet, dass** der mindestens eine Bolzen (18) relativ zu der mindestens einen Zahnradsegmentgruppe ortsfest, aber drehbar gelagert ist und auf einer in sich geschlossenen Kontur in der mindestens einen Stützscheibe (4) abrollt.

13. Getriebe (1) nach Anspruch 11, **dadurch gekennzeichnet, dass** der mindestens eine Bolzen (18) relativ zu der mindestens einen Stützscheibe (4) ortsfest, aber drehbar gelagert ist und auf einer in sich geschlossenen Kontur in der mindestens einen Zahnradsegmentgruppe abrollt.

14. Getriebe (1) nach Anspruch 11, **dadurch gekennzeichnet, dass** der mindestens eine Bolzen (18) sich sowohl auf einer in sich geschlossenen Kontur in der mindestens einen Stützscheibe (4) als auch auf einer in sich geschlossenen Kontur in der mindestens einen Zahnradsegmentgruppe abrollt, wobei die Kontur der mindestens einen Stützscheibe (4) und die Kontur der mindestens einen Zahnradsegmentgruppe so gestaltet sind, dass ihre Umfangslänge gleich ist.

15. Getriebe (1) nach mindestens einem der Ansprüche 11 bis 14, **dadurch gekennzeichnet, dass** sich die Federsegmente (8) der in axialer Richtung (A) nebeneinanderliegenden flexiblen Zahnradscheiben (13) auf der radialen Höhe des mindestens einen Bolzens (18) kreuzen.

16. Getriebe (1) nach mindestens einem der Ansprüche 9 bis 15, **dadurch gekennzeichnet, dass** in einem Fußbereich (10) von zumindest einigen der durch die in axialer Richtung nebeneinanderliegenden Zahnradsegmente (7) ausgebildeten Zahnradsegmentgruppen des flexiblen Zahnrads mindestens eine Rolle (21), vorzugsweise zwei Rollen (21), angeordnet sind, die in Kontakt mit dem mindestens einen Wavegenerator (3) stehen.
